# EUROPÄISCHE PATENTSCHRIFT

(11) **EP 2 170 213 B1**
(45) Veröffentlichungstag und Bekanntmachung des Hinweises auf die Patenterteilung: **04.07.2012**
(21) Anmeldenummer: 07763946.6
(22) Anmeldetag: 16.07.2007
(51) Int. Cl.: A61C 8/00

(54) **ZAHNIMPLANTAT**
DENTAL IMPLANT
IMPLANT DENTAIRE

(43) Veröffentlichungstag der Anmeldung: 07.04.2010
(73) Patentinhaber: Dentalpoint AG, 8048 Zürich (CH)
(72) Erfinder: KÖNIG, Arno, 8044 Zürich (CH)
(74) Vertreter: Rentsch Partner AG
(86) Internationale Anmeldenummer: PCT/CH2007/000343
(87) Internationale Veröffentlichungsnummer: WO 2009/009911

(56) Entgegenhaltungen:
- EP-A- 1 792 580
- DE-A1-102005 032 938
- DE-C1- 19 534 979
- DE-C1- 19 633 570
- US-A1- 2002 031 748

## Beschreibung

### FELD DER ERFINDUNG

Unter den Begriffen Zahnimplantat oder Dentalimplantat werden seit Jahren verschiedenste Zahnersatz-Systeme auf dem Markt angeboten und zum Teil sehr erfolgreich eingesetzt. Die Begriffe Zahnimplantat oder Dentalimplantat stehen in der Regel für den Zahnersatz per se und dürfen nicht mit dem eigentlichen Implantatkörper verwechselt werden, der als Zahnwurzelersatz korrekterweise als Implantat bezeichnet wird. Im Folgenden werden die Begriffe Zahnimplantat und Implantatkörper oder Implantat klar getrennt, wobei das Zahnimplantat den Zahnersatz bezeichnet, der den Implantatkörper zur Verankerung im Kieferknochen umfasst. Auf dem Markt herrschen zweiteilige und dreiteilige Zahnimplantate vor, wobei sich die dreiteiligen Zahnimplantate zum Ersatz eines Einzelzahns in der Regel aus einem endossalen Implantat oder Implantatkörper, einem Abutment (auch Verbindungsteil oder Implantatpfosten genannt) und einer Krone, einer Brücke oder einer anderen Prothetik aufbauen. Das Abutment erlaubt es dem Zahnarzt, die Krone gegenüber dem Implantat auszurichten, so dass ihre genaue Stellung im Zahnbogen nicht allein von der Lage des Implantatkörpers abhängig ist. Die Lage und die Position des Implantates wird oft von der jeweiligen anatomischen Situation im Kiefer des Patienten bestimmt. Durch entsprechend geformte oder justierbare Abutments oder das Bearbeiten des Abutment nach dem Einsetzen lässt sich die Stellung der Krone korrigieren.

Die Auswahl der Materialien für das Implantat ist durch höchste Anforderungen an die Biokompatibilität sowie dessen mechanischer Eigenschaften stark eingeschränkt. In den letzten Jahrzehnten hat sich vor allem Titan als bevorzugtes Material durchgesetzt, da es ein dem Kieferknochen ähnliches E-Modul hat und ausgezeichnet biokompatibel ist.

Ein Nachteil der Implantate und Abutments aus Titan besteht jedoch in ihrer dunklen Färbung. Bei einem Rückzug des Zahnfleisches und des Knochens kann es vor allem im Frontzahnbereich zum Sichtbarwerden oder Durchschimmern der dunklen Metallteile kommen, was aus kosmetischen Gründen äusserst unerwünscht ist. Als alternatives Material haben daher in den letzten Jahren Keramiken, z. B. Zirkonoxid-Keramik, verstärkt Beachtung gewonnen. Kritiker bringen vor, dass Implantate aus Zirkonoxid-Keramik wegen ihres hohen E-Moduls zu Frakturen der Implantatkörper in der Tiefe führen und dass ihr im Vergleich zum Titan geringerer Osseointegrationsgrad zu umfangreichen knochenauflösenden Entzündungen führen kann. Zahnimplantate aus Titan stehen wiederum in der Diskussion, durch Metallintoxikation negative Reaktionen auszulösen.

Gebräuchliche Implantatformen umfassen Blatt-, Nadel-, Schrauben-, Zylinder- und konische Implantate, die jeweils bei unterschiedlichen Indikationen zum Einsatz kommen. Diese bestimmen sich über das Knochenangebot, die Knochenqualität und das erstrebte Funktionsziel. Grundsätzlich können subperiostale und enossale Implantate eingesetzt werden, wobei derzeit in der Praxis fast ausschliesslich enossale Implantate von den Typen Blattsysteme, Schrauben- oder Zylindersysteme zur Anwendung kommen. Häufig verwendete enossale Implantate sind im Wesentlichen zylindrisch aufgebaut und werden in eine Bohrung im Kieferknochen oder direkt in den Kieferknochen eingeschraubt oder eingeschlagen. Am koronalen Ende sind die Implantate mit einer offenen Blindbohrung zur Aufnahme des Abutments versehen. Da das Abutment zur Aufnahme der Krone oder einer Brücke durch das Zahnfleisch hindurch in die Mundhöhle ragt, und nicht vollständig von diesem umschlossen ist, werden solche Zahnimplantate als halboffen bezeichnet Bei den halboffenen Zahnimplantaten wird die Krone, meist aus herkömmlicher Zahnkeramik und/oder Metall, auf das Abutment oder die einteilige Implantat/Abutmentkonstruktion geklebt oder zementiert oder mittels mechanischer Mittel daran befestigt. Bei geschlossenen, subgingivalen Systemen, wird das Implantat hingegen bis auf Knochenkammhöhe versenkt und die Mukoperiostdecke wird über dem Implantat vernäht. Nach dem Einheilen ist eine zweite Operation nötig, um das Abutment und darauf die gewünschte Brücke, Krone oder andere Prothetik anbringen zu können.

Aus der WO 2006/084346A1 der Firma Medin Tech ist ein Implantatsystem mit einem Abutment aus einem nicht-metallischen Material bekannt, das ein Implantat und einen Prothesenträger umfasst, der wiederum ein Abutment und ein Kragenelement umfasst. Wesentliche Merkmale des Implantatsystems sind, dass die Teile des Implantatsystems linear ineinander geschoben und untereinander verklebt werden. Das Abutment weist zwischen einem im Wesentlichen zylindrischen Basalpfosten und einem Kopfteil einen zylindrischen Halsteil mit einem unteren Vorsprung auf, welcher als Sechseck ausgeführt wird und der radialen Positionierung des Abutments in einer korrespondierenden Aufnahme in der Schulter des Implantats dient. Als bevorzugt werden drei-, fünf- oder siebeneckige Vorsprünge beschrieben, die mit entsprechenden drei-, fünf- oder siebeneckigen Aufnahmen in der Implantatschulter zusammenwirken und die Positionierung des Abutments in drei, fünf oder sieben verschiedenen radialen Winkelpositionen um die Längsachse des Implantats ermöglichen. Die zentrale Bohrung im Implantat zur Aufnahme des Basalpfostens ist mit einem Innengewinde versehen, das das Einschrauben einer Schraubkappe oder eines Platzhalters während des Abheilprozesses ermöglicht. Nach dem Abheilen wird ein Kragenelement über den Halsbereich des Abutments gestülpt und der Basalpfosten in die Gewindebohrung des Implantates eingeklebt. Das zwischen Implantat und Abutment angeordnete Kragenelement muss einen wesentlichen Anteil der beim Kauen eingeleiteten Kräfte aufnehmen und stellt mit seiner konvexen Aussenfläche die Kontaktfläche zum umgebenden Zahnfleisch dar. Im Abutment ist ein zentraler durchgehender axialer Kanal zum Abfliessen des Klebstoffes angebracht In der WO 2006/084346 A1 werden eine ganze Reihe von keramischen und Komposit- Materialien aufgelistet, die sich zur Herstellung des Abutments eignen. Ein Nachteil dieses Systems liegt im grossen technischen Aufwand zur Herstellung des zentralen Axialkanals im Abutment und den mechanischen Belastungen und Spannungen, welchen das Abutment dadurch ausgesetzt ist. Das Abutment bzw. das Positionierungselement des Abutments muss entsprechend entweder aus einem Material sein, welches hohen mechanischen Beanstandungen standhält oder, wie vorangehend ausgeführt, entsprechend dimensioniert sein. Ein weiterer Nachteil besteht darin, dass das Implantat nicht aus Keramikmaterial hergestellt werden kann, so dass ein reines Keramiksystem aus Keramikimplantat und Keramikabutment gemäss der Erfindung der WO 2006/084346 A1 nicht realisierbar ist.

Aus der EP 1728486 der Firma Straumann ist ein Implantatsystem mit einem Implantat und einem Abutment bekannt, bei dem das Abutment mit Mitteln zur rotationsgesperrten Halterung des Abutment im Implantat versehen ist. Eine Aufnahmeöffnung im Implantat ist derart ausgeführt, dass das Abutment mit einem basalen Anteil im Wesentlichen formschlüssig in die Aufnahmeöffnung in der gewünschten Winkelposition in das Implantat eingesteckt werden kann und in dieser Position durch eine separate Schraube am Implantat befestigt wird. Das Abutment ist zur Aufnahme der Schraube mit einer zentralen durchgehenden Bohrung versehen, so dass der basale Bereich sehr dünnwandig ausgebildet sein muss. Die Mittel, die die Verdrehung von Abutment und Implantat gegeneinander verhindern, bestehen wiederum aus einem polygonalen Anti-Rotations-Element am Abutment und einer Aufnahme, die die korrespondierende Form zum Anti-Rotations-Element aufweist. Das System der EP 1728486 A1 lässt eine Fertigung des Implantats und des Abutments aus Keramik mit den bekannten Herstellungsverfahren und -Techniken zu vertretbaren Kosten nicht zu.

Aus der EP1763324 ist ein mehrteiliges Implantatsystem bekannt, bei dem ein abgewinkeltes Abutment wiederum mittels einer separaten Schraube am Implantatkörper befestigt ist. Beim Einschrauben des Implantats wird das nötige Drehmoment mit einem Torx^{®}-ähnlichen Schlüsselangriff in Form eines Sechsrunds übertragen. Ähnlich wie beim Torx^{®}-Innenprofil weist der am distalen Ende der Aufnahmeöffnung des Implantats angeordnete Antriebsbereich ein Profil mit senkrecht verlaufenden Antriebsflächen auf, das einerseits das Auftreten von Rückschubkräften verhindert, und andererseits mit relativ großen Antriebsflächen für eine gute Kraftübertragung sorgt. Entsprechend zum Innenprofil im Implantat, das einem sechszackigen Stern mit abgerundeten Spitzen und Ecken ähnelt, weist das Abutment am proximalen Endbereich eine passgenaue äussere Wellenform mit ebenfalls sechs abgerundeten Spitzen und abgerundeten Ecken zum Einsetzen in die Aufnahmeöffnung des Implantats auf. Das Abutment lässt sich im Implantat in sechs diskreten, radialen Winkelpositionen positionieren. Die Herstellung eines Passitzes mit einer solchen komplexen Geometrie ist aufwändig und teuer und für keramische Materialien kaum geeignet.

Dokument DE 10 2005 032 938 offenbart ein Zahnersatz-System umfassend ein Implantat zur Osteointegration in einen Kieferknochen und ein Abutment, wobei durch das formschlüssige Zusammenwirken von Arretiermitteln an einer proximalen Abutmentbasis und mindestens einer Innenwand des proximalen Abschnittes der Aufnahmeöffnung des Implantats in mindestens zwei radialen Winkelstellungen positionierbar ist, wobei die Arretiermittel einen regelmässigen Sechs-kant-Schlüsselangriff mit sechs Sperrflächen im Implantat umfassen.

Trotz der Vielzahl von bekannten Systemen für den Ersatz von einzelnen Zähnen, die Versorgung von grösseren Zahnlücken oder von verkürzten Zahnreihen und zur Befestigung von Brücken oder Prothesen besteht bei den Anwendern steigender Bedarf an Produkten, die die Nachteile der bekannten Systeme vermeiden.

### HINTERGRUND DER ERFINDUNG

Der Erfindung liegt die Aufgabe zu Grunde, ein gattungsgemässes Zahnersatz-System zur Verfügung zu stellen, das die oben genannten Nachteile nicht aufweist. Es ist eine weitere Aufgabe, ein Zahnersatz-System, umfassend ein Implantat und ein Abutment, zur Verfügung zu stellen, das einerseits eine optimierte Geometrie zur Übertragung des Drehmoments beim Einschrauben des Implantats aufweist und andererseits eine möglichst grosse Variabilität bei der winkelstabilen Positionierung des Abutments sicherstellt. Ausserdem sollen die erfindungsgemässen Zahnersatz-Systeme volle Freiheit bei der Materialwahl in der Herstellung und bei der Kombination von Abutments und Implantaten aus Metall und/oder Keramik erlauben. Sie sollen einfach und kostengünstig herstellbar sein und das Zahnersatz-System soll höchsten Anforderungen an Stabilität, Qualität und Lebensdauer gerecht werden. Diese Aufgabe wird durch ein Zahnersatz-System mit den Merkmalen des Anspruchs 1 erfüllt.

Ein wesentlicher Vorteil der vorliegenden Erfindung besteht darin, dass sie sich bei verschiedensten Zahnersatz-Systemen realisieren lässt, bei denen das Abutment im Implantat rotationsgesperrt in einer bestimmten Winkelposition positioniert werden soll, um anschliessend oder nach einem weiteren Nachbearbeiten des Abutments eine Krone, Brücke oder eine andere Prothetik in einer vorgegebenen Position auf dem Abutment befestigen zu können. Im Folgenden soll der Begriff Krone, sofern nicht ausdrücklich etwas anderes erwähnt ist, auch Brücken und alle anderen Formen von Prothesen umfassen die an den Abutments angebracht werden.

Bei den erfindungsgemässen Zahnersatz-Systemen wird das zum Einschrauben des Implantats nötige Drehmoment mit einem Mehrkant-Schlüsselangriff mit senkrecht verlaufenden Antriebsflächen übertragen. Der Mehrkant-Schlüsselangriff ist vorzugsweise ein Dreikant mit gleichseitigem Querschnitt, der am proximalen Ende der Aufnahmeöffnung des Implantats in einem Antriebsbereich angeordnet ist. Das Einschraubwerkzeug ist mit einem passenden Aussenmehrkant versehen um einen Mehrkant-Schlüsselangriff mit einem Drehmomentschluss mit grösstmöglicher Antriebsfläche zu erzielen. Beim Einschrauben des Implantats in den Knochen verhindert das Profil mit senkrecht verlaufenden Antriebsflächen das Auftreten von Rückschubkräften.

Das Abutment lässt sich im eingesetzten Zustand im Implantat in einer Mehrzahl von diskreten, radialen Winkelpositionen gesperrt positionieren. Dabei greift ein Aussenmehrkant mit senkrecht verlaufenden Sperrflächen am proximalen Ende des Abutments in den Mehrkant-Schlüsselangriff am proximalen Ende der Aufnahmeöffnung des Implantats ein. Im Gegensatz zu den bekannten Implantatsystemen weisen Mehrkant-Schlüsselangriff im Implantat und Aussenmehrkant am Abutment nicht die selbe Anzahl von Flächen auf. Einem N-kant-Schlüsselangriff im Implantat ist ein Abutment mit einem N*X- Aussenmehrkant zugeordnet, wobei N die Anzahl von Sperrflächen im Schlüsselangriff bezeichnet und N*X für ein ganzzahliges Vielfaches von N steht. Einem Dreikant-Schlüsselangriff wird zum Beispiel ein Abutment mit einem Aussen-Sechskant zugeordnet. Eine solche Ausführungsform der Erfindung erlaubt es das Abutment in sechs diskreten Winkelpositionen rotationsgesperrt im Implantat zu positionieren, wobei der aufgrund seiner Lage im Inneren des Implantats schwierig zu bearbeitende Schlüsselangriff ein einfach herzustellender Innen-Dreikant ist. Wird ein Abutment mit einem Aussen-Neunkant versehen, dann kann unter Verwendung des gleichen Implantats mit Dreikant-Schlüsselangriff das Abutment in neun vorgegebenen Radialpositionen eingesetzt und gesperrt werden. Ein Abutment mit einem Aussen-Zwölfkant erlaubt im Einsatz mit dem gleichen Implantat mit Dreikant-Schlüsselangriff zwölf Sperrpositionen. Insbesondere bei schwierig zu bearbeitenden Keramik-Implantaten bringt die einfache Gestaltung des Schlüsselangriffs im Implantat wesentliche Vorteile mit sich. Die Herstellung von Aussenmehrkanten mit sechs, neun und mehr Sperrflächen ist auch bei keramischen Abutments wirtschaftlich vertretbar, da der zu bearbeitende Bereich frei zugänglich ist, und zum Beispiel einfach geschliffen werden kann.

Ein weiterer entscheidender Vorteil des erfindungsgemässen Systems liegt darin, dass der Zahnmediziner allein durch die Wahl des Abutments die Anzahl von Sperrstellungen auswählen kann. Da er mehrere verschiedene Typen von Abutments mit dem selben Implantat einsetzen kann, verringert sich sein Aufwand bei der Lagerhaltung erheblich.

Angesichts des vorgängig gesagten, ist es für den Fachmann verständlich, dass sich das erfindungsgemässe Zahnersatz-System auch mit Wirkmittelpaarungen basierend auf regelmässigen Mehrkanten zum Beispiel der Vierer-, Fünfer- oder Sechserreihe realisieren lässt. Einem Implantat mit einem vierkantigen, d.h. im Wesentlichen quadratischen, Innenangriff können zum Beispiel Abutments mit acht-, zwölf- oder sechzehnkantigem Aussen-Mehrkant zugeordnet werden. Mit einem Implantat mit Fünfkant- Innenangriff lassen sich entsprechend Abutments mit zehn- oder fünfzehnkantigem Aussenmehrkant und bei Implantaten mit Sechskant-Innenangriff Abutments mit zwölf- oder sechzehnkantigem Aussenmehrkant einsetzen. Sollten Systeme mit noch mehr Sperrpositionen gewünscht sein, so lassen sich diese gemäss der Erfindung ebenfalls problemlos verwirklichen.

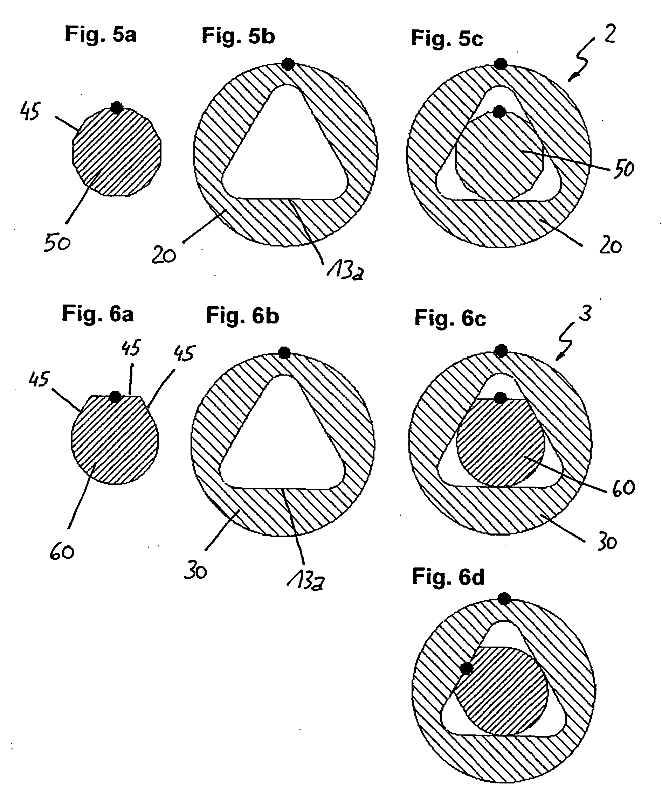

Gemäss einer weiteren Ausführungsform der Erfindung werden bei den einzusetzenden Abutments nicht alle Sperrflächen körperlich ausgeformt; sondern es ist nur eine minimal nötige Anzahl von Wirkflächen ausgebildet. In der Figur 6 ist schematisch dargestellt, wie bei einem Abutment, das im Bereich der Sperrmittel einen im wesentlichen kreisförmigen Querschnitt aufweist, drei tangential zur zylindrischen Mantelfläche angeordnete Wirkflächen einen Zweikant ausbilden. Dieser Zweikant entspricht durch seine drei Sperrflächen funktional einem gleichmässigen Sechskant und erlaubt das rotationsgesperrte Einsetzen des Abutments in sechs vorgegebenen Winkelpositionen. Schon allein an diesem Beispiel wird deutlich, dass der Ausdruck Mehrkant wie er nachfolgend gebraucht wird, nicht nur "echte Mehrkante" in Form von polygonalen Prismen mit regelmässigen mehreckigen Querschnittsflächen und gleichmässigen Seitenbreiten umfasst, sondern auch "funktionale Mehrkante", bei denen unregelmässige polygonale Prismen ausreichende Anteile des echten Mehrkants aufweisen, um als wirkungsgleiche Mittel dienen zu können.

Alle bevorzugten Ausführungsformen der erfindungsgemässen Zahnersatzsysteme haben gemeinsam, dass durch das formschlüssige Zusammenwirken von Sperr- oder Arretiermitteln an Abutment und Implantat eine zuverlässige Positionierung des Abutments in einer gewünschten Radialstellung (ausgewählt aus einer Mehrzahl von vorgegebenen diskreten Winkelstellungen) mit anschliessender Blockierung in genau dieser Radialstellung sichergestellt wird. Die Ausgestaltung der drehmomentschlüssigen Verbindung erfolgt im Bereich der proximalen Abutmentbasis und mindestens einer Innenwand eines proximalen Abschnittes der Aufnahmeöffnung im Implantat als Innenangriff. Sie stellt sicher, dass sich das Implantat in mindestens doppelt so vielen diskreten radialen Winkelstellungen positionieren lässt wie der Innenangriff Kanten, respektive Sperrflächen aufweist.

Die relativ einfache Geometrie der an der Positionierung und Sperrung beteiligten Mittel erleichtert das Einhalten der geforderten Toleranzen bei der Herstellung von Abutment und Implantat, insbesondere bei Produkten aus Keramik.

Bei den erfindungsgemässen Zahnersatz-Systemen wird das Abutment vorzugsweise in der Aufnahmeöffnung eingeklebt, so dass weder Abutment noch Implantat durch zentrale Bohrungen für die Aufnahme einer Befestigungsschraube geschwächt werden müssen.

Ein weiterer Vorteil der vorliegenden Erfindung liegt darin, dass sie sich nicht nur bei herkömmlichen Implantaten, sondern auch bei Implantaten realisieren lässt, die gemäss dem Konzept des Platform Switching aufgebaut sind. Hierbei wird eine Erhaltung des crestalen Knochens durch eine gezielte Kombination eines kleineren Abutmentdurchmessers mit einer größeren Implantatplattform angestrebt.

### KURZBESCHREIBUNG DER FIGUREN

- Fig. 1: ein Implantat eines Zahnersatz-Systems gemäss einer ersten Ausführungsform der Erfindung im sektoriellen Längsschnitt entlang der Zentralachse mit eingesetztem Abutment, bei dem die Krone nicht gezeichnet ist;
- Fig. 2a: eine Seitenansicht auf ein Abutment gemäss Figur 1, wobei das Abutment gegenüber der Ansicht der Figur 1 um 60° im Uhrzeigersinn gedreht dargestellt ist;
- Fig. 2b: das Abutment gemäss Figur 2a in einer Schrägansicht von Proximal;
- Fig. 3: das Implantat gemäss Figur 1 in einer Sicht von Distal in die Aufnahmeöffnung;
- Fig. 4: eine schematische Darstellung von Schnitten durch ein Abutment (a) und ein Implantat (b) gemäss einer ersten Ausführungsform im Bereich der Wirkmittelpaarung einzeln (a, b) und in verschieden zusammensteckten Zuständen (c) bis (h);
- Fig. 5 bis 8: schematische Darstellungen von Schnitten durch jeweils ein Abutment (a) und ein Implantat (b) gemäss weiterer Ausführungsformen im Bereich der Wirkmittelpaarungen einzeln (a, b) und im zusammensteckten Zustand (c) bzw. Zuständen (c) und (d), und
- Fig. 9: ein weiteres nicht erfindungsgemässes Abutment in einer Schrägansicht von Proximal.

### DETAILLIERTE BESCHREIBUNG BEVORZUGTER AUSFÜHRUNGSFORMEN

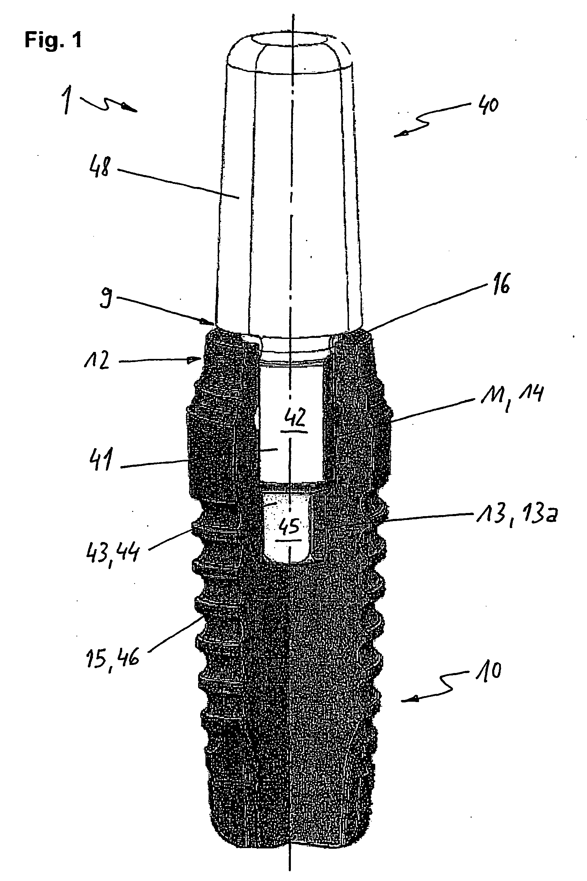

In der Figur 1 ist ein Zahnersatz-System 1 mit einem teilweise geschnittenen Implantat 10 in montiertem Zustand dargestellt, so dass die Sicht auf ein Abutment 40 mit einem zylindrischen Abutmentstamm 41 freigegeben ist, der in einer korrespondierenden zylindrischen Aufnahmeöffnung 11 im Implantat 10 eingepasst ist. Der Abutmentstamm 41 weist eine zylindrische äussere Mantelfläche 42 auf, die passgenau mit zur zylindrischen Aufnahmeöffnung 11 gefertig ist. In einem proximalen Bereich 43 verjüngt sich der Abutmentstamm 41 und geht im dargestellten Ausführungsbeispiel in einen Aussen-Sechskant 44 über. Der Aussen-Sechskant 44 funktioniert als Positionierhilfe beim Einsetzen des Abutments in das Implantat 10 und als Arretiermittel zur Verdrehsicherung oder Rotationssperrung des Abutments 40 im eingesetzten Zustand im Implantat 10.

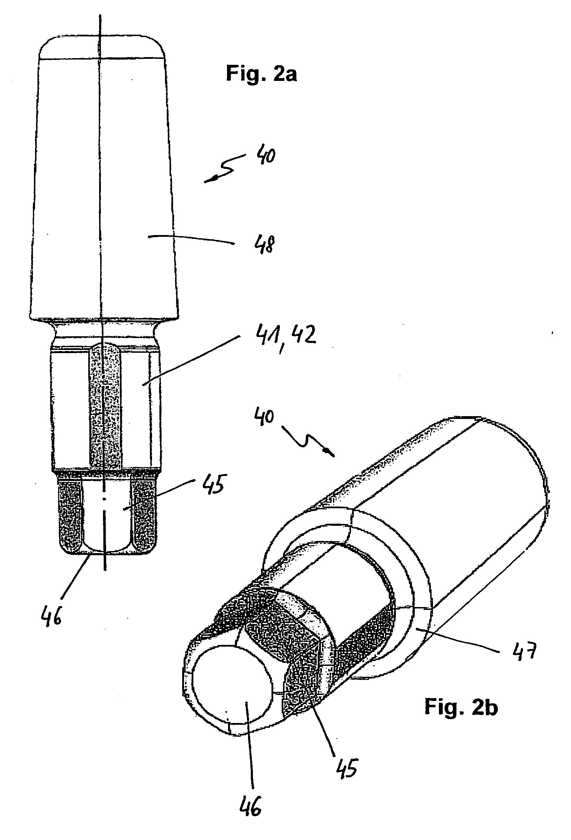

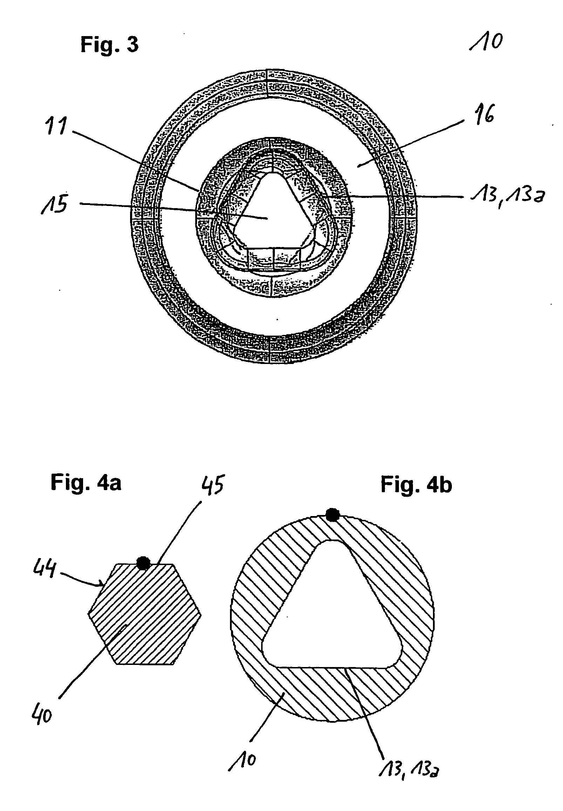

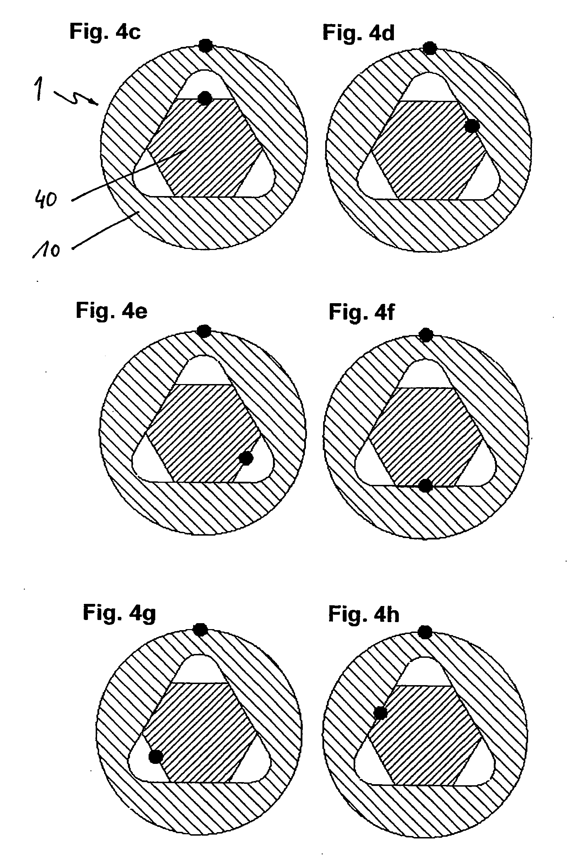

Wie aus den Fig. 4c bis 4h hervorgeht, lässt sich bei diesem Ausführungsbeispiel das Abutment 40 in sechs diskreten, radialen Winkelpositionen gesperrt positionieren. Dabei greift der in den Fig. 2a und 2b dargestellte, am proximalen Ende des Abutments angeordnete Aussenmehrkant 44 mit seinen senkrecht verlaufenden Sperrflächen 45 in einen Dreikant-Schlüsselangriff 13 am proximalen Ende der Aufnahmeöffnung 11 des Implantats 10 ein. Wie bereits erwähnt, weisen bei den neuen Systemen gemäss der vorliegenden Erfindung - im Gegensatz zu allen bekannten Implantatsystemen - der Mehrkant-Schlüsselangriff 13 im Implantat 10 und der Aussenmehrkant 44 am Abutment 10 nicht die selbe Anzahl von Flächen auf.

In der Figur 3 ist eine Ansicht von Distal auf das Implantat 10 wiedergegeben. Sie erlaubt den Blick in die im Wesentlichen kreiszylindrische Blindbohrung vom koronalen Ende 12 des Implantats bis auf den Grund der Aufnahmeöffnung, die unterseitig koaxial im Innen-Dreikant 13 mündet.

Die Wirkmittelkombination von Aussensechskant und Innendreikant ist in den Fig. 4a bis 4c nochmals schematisch verdeutlicht. Im dargestellten zusammengebauten Zustand der Figur 4c greift der korrespondierende Aussensechskant 44 des Abutments 40 als Verdrehsicherung in den Innendreikant 13 ein. Es ist deutlich erkennbar, dass der Aussen-Sechskant 44 und der Dreikant-Schlüsselangriff 13 so dimensioniert sind, dass das Abutment 40 im eingesetzten Zustand relativ zum Implantat 10 nicht mehr um die Zentralachse gedreht werden kann. In der Figur 4c ist entsprechend eine erste Winkelposition des Abutments mittels eines Punktes in 12 Uhr-Stellung angedeutet. Die Figuren 4d bis 4h zeigen, dass sich das selbe Abutment 40 in fünf weiteren diskreten Winkelpositionen, jeweils um 60° gedreht, im mittels eines weiteren Punktes als fix angeordnet gekennzeichneten Implantat 10 positionieren lässt.

Das Abutment 40 wird vorzugsweise in das Implantat 10 eingeklebt, so dass eine kraft- und formschlüssige Verbindung zwischen dem kreiszylindrischen Bereich 42 des Abutment 40 und dem korrespondierenden kreiszylindrischen Passsitz 14 der Aufnahmeöffnung 11 im Implantat 10 hergestellt ist. Die zylindrische Implantat-Abutment-Verbindung, die Scherkräfte in äusserst vorteilhafter Weise aufnehmen kann, wird ergänzt durch die kraftschlüssige Auflage einer proximalen Grundfläche 46 des Abutmentstammes 41 auf dem Grund 15 des Innendreikants 13 und damit der Aufnahmeöffnung 11, die die Axialbewegung des Abutments 40 in proximaler Richtung begrenzt. Über diese Auflage werden im eingesetzten Zustand primär die auf das Abutment 40 wirkenden Axialkräfte in das Implantat 10 eingeleitet.

Es ist für den Fachmann ersichtlich, dass sich die erfinderischen Wirkmittel zur Positionierung und Rotationssperrung in vorteilhafter Weise auch bei Implantaten mit konischem oder andersartig geformtem Abutmentstamm einsetzen lässt.

Das koronale Ende 12 des Implantates 10 ist von einer annähernd senkrecht zur Zentralachse verlaufenden Ringfläche 16, die die Aufnahmeöffnung 11 umgibt, gebildet. Zwischen dieser Ringfläche 16 und einem proximalen Flansch 47 im Übergangsbereich zwischen Abutmentstamm 41 und Kopfbereich 48 des Abutments 40 ist bei eingepasstem Abutment 40 ein Ringspalt 9 ausgebildet. Dadurch wird verhindert, dass der Kopf 48 des Abutments 40 auf der oberen Ringfläche 16 des Implantats 10 zu liegen kommt und es ist sichergestellt, dass im eingebauten Zustand die Krafteinleitung vom Abutment 40 in das Implantat 10 nur über den Passzylinder 42 im Stammbereich 41 und der Basalfläche 46 erfolgt. Der vom Ringspalt erzeugte Abstand zwischen Abutment und Implantat beträgt bei allen Ausführungsformen vorzugsweise zwischen 5 und 15 µm, besonders bevorzugt beträgt er 10 µm und er sollte 30 µm nicht übersteigen. Durch das Verkleben von Implantat 10 und Abutment 40 werden auch die torsional wirkenden Kräfte primär vom zylindrischen Passsitz aufgenommen, können aber auch über die drehmomentschlüssige Wirkverbindung zwischen den Mehrkanten übertragen und von diesen aufgenommen werden.

Die axiale Dimensionierung der bei der Verdrehsicherung zusammenwirkenden Anteile 44 und 13 des Abutments 40 und des Implantates 10 sind derart aufeinander abgestimmt, dass bei vollständig in das Implantat 10 eingeführtem Abutment 40 der Passzylinder 42 des Abutmentstamms 41 in seinem proximalen Endbereich gegenüber dem Innendreikant 13 sicher abgesetzt ist und es hier zu keinem unerwünschten Kontakt und Belastungen mit axialen Kraftkomponenten kommen kann. Die Höhe Hv des Aussenmehrkants bzw. Aussensechskants 44 am Abutment 40 ist, wie aus der Figur 1 deutlich wird, grösser als die Tiefe des korrespondierenden Innendreikants 13 im Implantat 10.

Die Höhe Hv des Aussenmehrkants liegt vorzugsweise bei mindestens 1 mm, vorzugsweise zwischen 1.5 und 6 mm, besonders bevorzugt bei 1.5 mm. Die Kanten von Innen- und Aussenmehrkant sind vorzugsweise mit Radien von mindestens 0.1 mm, vorzugsweise zwischen 0.2 und 0.3 mm, besonders bevorzugt mit 0.25 mm verrundet, um das Einsetzen des Abutments zu erleichtern und um Spitzenbelastungen an der Keramik zu vermeiden.

Anhand der Fig. 5 soll auf eine weitere Ausführungsform des erfindungsgemässen Zahnersatz-Systems 2 eingegangen werden, bei der ein Abutment 50 im zusammengebautem Zustand durch das formschlüssige Zusammenwirken von einem im Querschnitt im Wesentlichen gleichseitig-dreieckig geformten Schlüsselangriff 13a eines Implantats 20 und einem als Zwölfkant ausgeführten Aussenmehrkant 44 im Abutment 50 verdrehsicher im Implantat 20 gesperrt wird.

Gemäss einer weiteren Ausführungsform des erfindungsgemässen Zahnersatz-Systems 3 werden beim einem einzusetzenden Abutment nicht alle Sperrflächen körperlich ausgeformt, sondern es ist nur eine minimal nötige Anzahl von Wirkflächen ausgebildet. In der Figur 6a ist schematisch dargestellt, wie bei einem Abutment 60, das im Bereich der Sperrmittel einen im wesentlichen kreisförmigen Querschnitt aufweist, drei tangential zur zylindrischen Mantelfläche angeordnete Wirkflächen einen Zweikant ausbilden. Dieser Zweikant entspricht durch seine drei Sperrflächen 45 funktional einem gleichmässigen Sechskant und erlaubt das rotationsgesperrte Einsetzen des Abutments 60 in sechs vorgegebenen Winkelpositionen. In den Figuren 6c und 6d sind zwei Winkelpositionen des Abutments 60 mittels eines Punktes angedeutet, wobei ein weiterer Punkt die fixe Anordnung des Implantats 30 andeutet.

Insbesondere aus der soeben erläuterten Ausführungsform des erfindungsgemässen Zahnersatz-Systems 3 wird deutlich, dass der verwendete Ausdruck "Mehrkant" nicht nur "echte Mehrkante" in Form von polygonalen Prismen mit regelmässigen mehreckigen Querschnittsflächen und gleichmässigen Seitenbreiten umfasst, sondern auch "funktionale Mehrkante", bei denen unregelmässige polygonale Prismen ausreichende Anteile des echten Mehrkants aufweisen, um als wirkungsgleiche Mittel dienen zu können.

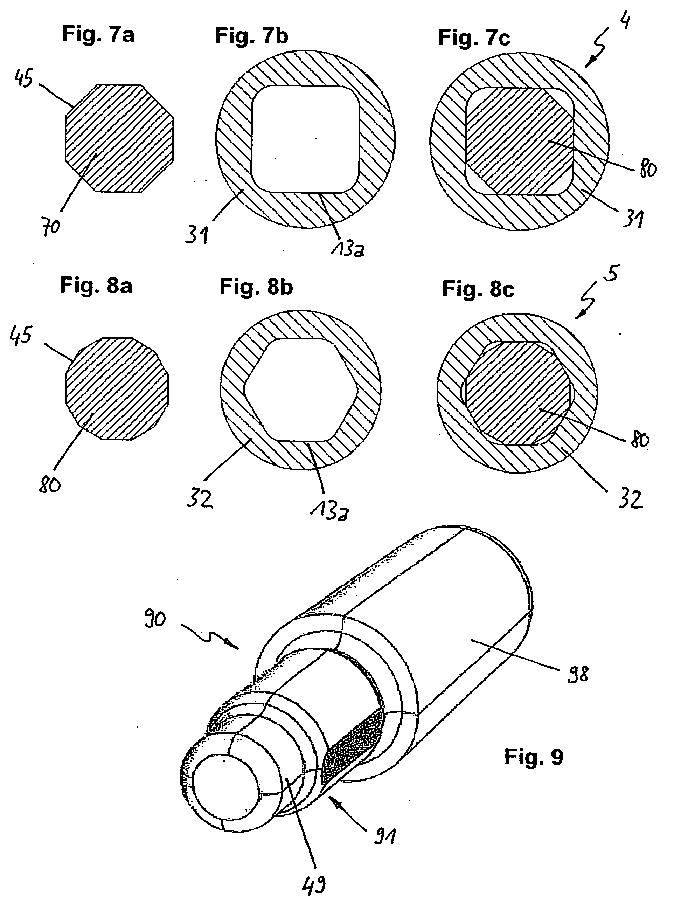

Anhand der Figuren 7a bis 7c soll auf eine weitere vorteilhafte Ausführungsform des erfindungsgemässen Zahnersatz-Systems 4 eingegangen werden, bei der ein eingesetztes Abutment 70 durch das formschlüssige Zusammenwirken von einem im Querschnitt im Wesentlichen quadratisch geformten Schlüsselangriff 13a in einem Implantat 31 und einem als Aussenachtkant geformten Aussenmehrkant 44 des Abutments 70 verdrehsicher im Implantat 31 gesperrt wird.

Stellvertretend für weitere Wirkmittelpaarungen basierend auf regelmässigen Mehrkanten ist in den Fig. 8a bis 8c eine weitere Ausführungsform eines erfindungsgemässen Zahnersatz-Systems 5 dargestellt, welche auf der Sechserreihe basiert. Daher wird ein Abutment 80 im zusammengebautem Zustand durch das formschlüssige Zusammenwirken von einem im Querschnitt im Wesentlichen als Innensechskant geformten Schlüsselangriff 13a eines Implantats 32 und einem als Zwölfkant ausgeführten Aussenmehrkant 44 des Abutments 80 verdrehsicher im Implantat 32 gesperrt.

Es soll erwähnt werden, dass sich in ein nicht erfindungsgemässes Implantat 10, 20, 30, 31, 32 auch Abutments einsetzen lassen, die nicht rotationsgesperrt sind, beispielsweise wie das in Fig. 9 gezeigte Abutment 90. Dabei umfassen die Implantate 10, 20, 30, 31, 32 einen kreiszylindisch ausgebildeten proximalen Abschnitt 49 eines Abutmentstammes 91 des Abutments 90, so dass das Abutment 90 im proximalen Innenmehrkant beziehungsweise Mehrkant-Schlüsselangriff 13, 13a des Implantates 10, 20, 30, 31, 32 im vollständig eingeführten Zustand frei drehbar ist.

Vorzugsweise sind die erfindungsgemässen Zahnersatz-Systeme in mindestens sechs radialen Winkelstellungen positionierbar. Die polygonalen Arretiermittel 13, 13a im proximalen Bereich der Aufnahmeöffnungen der Implantate dienen einerseits als Hilfsmittel zur Radialpositionierung und der rotationsgesperrten Halterung des Abutments im Implantat, beim Einschrauben des Implantats dienen sie andererseits zur drehmomentschlüssigen Aufnahme des Schraubwerkzeuges. Die Positionierung unmittelbar über dem massiven mit einem Aussengewinde versehenen Proximalteil des Implantats lässt eine optimale Kraftübertragung bei minimaler Torsionsbelastung dünnwandiger Implantatbereiche beim Eindrehen in den Kieferknochen zu und eignet sich daher besonders für eine Herstellung aus Keramikmaterialien.

Für den Fachmann ist es anhand der vorliegenden Offenbarung einfach nachvollziehbar, dass die erfindungsgemässen Zahnersatz-Systeme 1, 2, 3, 4, 5 eine maximale Auswahlfreiheit bei der Materialauswahl zulassen. Es lassen sich sowohl die Implantate wie auch die Abutments aus Titan öder Keramik fertigen und beide Bauteile können in allen möglichen Materialkombinationen zum Einsatz kommen. Erstmals wird dadurch der Einsatz, respektive das Einkleben von keramischen Abutments in Implantate aus Titanoxid oder anderen metallischen Werkstoffen ermöglicht.

Gerade die Vorteile bei der Herstellung treten aber besonders bei Implantaten und Abutments aus Keramik zu Tage. Als keramische Herstellungsmaterialien haben sich dabei bekannte Zirkonoxid oder Zirkonoxid/Aluminium-Mischungen besonders bewährt.

Obwohl in den dargestellten Ausführungsbeispielen nur axialsymmetrische Abutments dargestellt sind, lässt sich die erfindungsgemässe Lehre auch auf Abutments mit gegenüber dem Stamm abgewinkeltem Kopf anwenden. Gleiches gilt für die leicht konische Form des Abutmentkopfes, der durchaus, bevorzugt bei keramischen Abutments, auch als Zylinder zum individuellen Nachbearbeiten ausgebildet sein kann.

Die erfindungsgemässe Verbindung zwischen Implantat und Abutment verhindert, dass, wie bei vorbekannten Abutments, die im Implantat verschraubt werden, das Risiko besteht, dass Spannungen im System und/oder Schraubenbrüche durch Überlastungen entstehen.

### LISTE DER BEZUGSZAHLEN

- Zahnersatz-System: 1, 2, 3, 4, 5
- Ringspalt: 9
- Implantat: 10, 20, 30, 31, 32
- Aufnahmeöffnung: 11
- koronales Ende: 12
- Innendreikant: 13
- Mehrkant-Schlüsselangriff: 13a
- Passsitz: 14
- Grund: 15
- Ringfläche: 16
- Abutment: 40, 50, 60, 70, 80, 90
- Abutmentstamm: 41,91
- Passzylinder: 42
- Verjüngung: 43
- Aussenmehrkant: 44
- Sperrfläche: 45
- Grundfläche: 46
- Flansch: 47
- Kopfbereich: 48
- proximaler Abschnitt: 49

## Patentansprüche

1. Zahnersatz-System (1, 2, 3, 4, 5) umfassend ein Implantat (10, 20, 30, 31, 32) zur Osteointegration in einen Kieferknochen und ein Abutment (40, 50, 60, 70, 80), wobei durch das formschlüssige Zusammenwirken von Arretiermitteln an einer proximalen Abutmentbasis und mindestens einer Innenwand des proximalen Abschnittes der Aufnahmeöffnung (11) des Implantats das Abutment in mindestens zwei radialen Winkelstellungen positionierbar ist, wobei die Arretiermittel einen N-kant-Schlüsselangriff (13a) im Implantat (10, 20, 30, 31, 32) und einen N*X-Aussenmehrkant (44) am Abutment (40, 50, 60, 70, 80) umfassen, wobei N die Anzahl von Sperrflächen im Schlüsselangriff (13a) bezeichnet und N*X für ein ganzzahliges Vielfaches von N steht und X grösser 1 ist.

2. Zahnersatz-System (1, 2, 3, 4, 5) nach Anspruch 1, **dadurch gekennzeichnet, dass** die Arretiermittelpaarungen auf regelmässigen Mehrkanten, vorzugsweise jeweils ausgewählt aus der Dreier-, Vierer-, Fünfer- oder Sechserreihe, basiert.

3. Zahnersatz-System (1, 2, 3, 4, 5) nach Anspruch 2, **dadurch gekennzeichnet, dass** die regelmässigen Mehrkante polygonalen Prismen mit regelmässigen mehreckigen Querschnittsflächen und gleichmässigen Seitenbreiten sind.

4. Zahnersatz-System (1 2, 3, 4, 5) umfassend ein Implantat (10, 20, 30, 31 , 32) zur Osteointegration in einen Kieferknochen und ein Abutment (40, 50, 60, 70, 80), wobei durch das formschlüssige Zusammenwirken von Arretiermitteln an einer proximalen Abutmentbasis und mindestens einer Innenwand des proximalen Abschnittes der Aufnahmeöffnung (11) des Implantats das Abutment in mindestens zwei radialen Winkelstellungen positionierbar ist, wobei die Arretiermittel (13a, 44) auf einem regelmässigen N-kant-Schlüsselangriff (13a) im Implantat (30) und einem funktionellen N*X Aussenmehrkant am Abutment (60) basieren, bei dem nur eine minimal nötige Anzahl von Wirkflächen als funktionale Sperrflächen (45) und ausreichenden Anteilen eines echten Mehrkants körperlich ausgeformt sind, wobei N die Anzahl von Sperrflächen im Schlüsselangriff (13a) bezeichnet und N*X für ein ganzzahliges Vielfaches von N steht und X grösser 1 ist.

5. Zahnersatz-System (1 2, 3, 4, 5) umfassend ein Implantat (10, 20, 30, 31 , 32) zur Osteointegration in einen Kieferknochen und ein Abutment (40, 50, 60, 70, 80), wobei durch das formschlüssige Zusammenwirken von Arretiermitteln an einer proximalen Abutmentbasis und mindestens einer Innenwand des proximalen Abschnittes der Aufnahmeöffnung (11) des Implantats das Abutment in mindestens zwei radialen Winkelstellungen positionierbar ist, wobei die Arretiermittel (13a, 44) auf einem regelmässigen N*X Aussenmehrkant (44) am Abutment und einem funktionellen N-kant-Schlüsselangriff (13a) im Implantat basieren, bei dem nur mindestens eine oder eine minimal nötige Anzahl von Wirkflächen als funktionale Sperrflächen körperlich ausgeformt sind, wobei N die Anzahl von funktionalen Sperrflächen im Schlüsselangriff (13a) bezeichnet und N*X für ein ganzzahliges Vielfaches von N steht und X grösser 1 ist.

6. Zahnersatz-System (1, 2, 3, 4, 5) nach einem der vorhergehenden Ansprüche, **dadurch gekennzeichnet, dass** das Abutment (40, 50, 60, 70, 80) in der Aufnahmeöffnung (11) einklebbar ist.

7. Zahnersatz-System (1, 2, 3, 4, 5) nach einem der Ansprüche 1 bis 6, **dadurch gekennzeichnet, dass** das Implantat (10, 20, 30, 31, 32) und/oder Abutment (40, 50, 60, 70, 80) aus Titan oder Keramik gefertigt sind.

8. Zahnersatz-System (1, 2, 3, 4, 5) nach Anspruch 7 **dadurch gekennzeichnet, dass** das keramische Implantat (10, 20, 30, 31, 32) und/oder das keramische Abutment (40, 50, 60, 70, 80) aus Zirkonoxid oder einer Zirkonoxid/Aluminium-Mischung gefertigt sind.

9. Zahnersatz-System (1, 2, 3, 4, 5) nach einem der vorangegangenen Ansprüche, **dadurch gekennzeichnet, dass** bei eingeführtem Abutment (40, 50, 60, 70, 80) ein Abutmentstamm (41, 91) mit einer Basalfläche (46) auf einer Grundfläche (15) in der Aufnahmeöffnung (11) aufliegt.

10. Zahnersatz-System (1, 2, 3, 4, 5) nach einem der vorhergehenden Ansprüche, **dadurch gekennzeichnet, dass** das Abutment als massiver Körper ausgebildet ist.

## Claims

1. Tooth replacement system (1, 2, 3, 4, 5) comprising an implant (10, 20, 30, 31, 32), for osseointegration in a jaw bone, and an abutment (40, 50, 60, 70, 80), wherein the abutment is positionable in at least two radial angle positions by the form-fit interaction of locking means, on a proximal abutment base, and of at least one inner wall of the proximal portion of the receiving opening (11) of the implant, wherein the locking means comprise an N-edge wrench socket (13a) in the implant (10, 20, 30, 31, 32) and an N*X external polygon (44) on the abutment (40, 50, 60, 70, 80), where N designates the number of locking surfaces in the wrench socket (13a) and N*X stands for an integral multiple of N and X is greater than 1.

2. Tooth replacement system (1, 2, 3, 4, 5) according to Claim 1, **characterized in that** the pairs of locking means are based on regular polygons, in each case preferably selected from the three, four, five or six series.

3. Tooth replacement system (1, 2, 3, 4, 5) according to Claim 2, **characterized in that** the regular polygons are polygonal prisms with regular polygonal cross-sectional surfaces and uniform side widths.

4. Tooth replacement system (1, 2, 3, 4, 5) comprising an implant (10, 20, 30, 31, 32), for osseointegration in a jaw bone, and an abutment (40, 50, 60, 70, 80), wherein the abutment is positionable in at least two radial angle positions by the form-fit interaction of locking means, on a proximal abutment base, and of at least one inner wall of the proximal portion of the receiving opening (11) of the implant, wherein the locking means (13a, 44) are based on a regular N-edge wrench socket (13a) in the implant (30) and on a functional N*X external polygon on the abutment (60), in which only a minimum necessary number of active surfaces are physically embodied as functional locking surfaces (45) and sufficient areas of a genuine polygon, where N designates the number of locking surfaces in the wrench socket (13a) and N*X stands for an integral multiple of N and X is greater than 1.

5. Tooth replacement system (1, 2, 3, 4, 5) comprising an implant (10, 20, 30, 31, 32), for osseointegration in a jaw bone, and an abutment (40, 50, 60, 70, 80), wherein the abutment is positionable in at least two radial angle positions by the form-fit interaction of locking means, on a proximal abutment base, and of at least one inner wall of the proximal portion of the receiving opening (11) of the implant, wherein the locking means (13a, 44) are based on a regular N*X external polygon (44) on the abutment and on a functional N-edge wrench socket (13a) in the implant, in which only at least one active surface or a minimum necessary number of active surfaces are physically embodied as functional locking surfaces, wherein N designates the number of functional locking surfaces in the wrench socket (13a) and N*X stands for an integral multiple of N and X is greater than 1.

6. Tooth replacement system (1, 2, 3, 4, 5) according to one of the preceding claims, **characterized in that** the abutment (40, 50, 60, 70, 80) can be adhesively bonded in the receiving opening (11).

7. Tooth replacement system (1, 2, 3, 4, 5) according to one of Claims 1 to 6, **characterized in that** the implant (10, 20, 30, 31, 32) and/or abutment (40, 50, 60, 70, 80) are made from titanium or ceramic.

8. Tooth replacement system (1, 2, 3, 4, 5) according to Claim 7, **characterized in that** the ceramic implant (10, 20, 30, 31, 32) and/or the ceramic abutment (40, 50, 60, 70, 80) are made from zirconium oxide or a zirconium oxide/aluminium mixture.

9. Tooth replacement system (1, 2, 3, 4, 5) according to one of the preceding claims, **characterized in that**, when the abutment (40, 50, 60, 70, 80) is inserted, an abutment stem (41, 91) lies with a base surface (46) on a bottom surface (15) in the receiving opening (11).

10. Tooth replacement system (1, 2, 3, 4, 5) according to one of the preceding claims, **characterized in that** the abutment is designed as a solid body.

## Revendications

1. Système de remplacement de dent (1, 2, 3, 4, 5) comprenant un implant (10, 20, 30, 31, 32) destiné à l'ostéointégration dans un os maxillaire et un aboutement (40, 50, 60, 70, 80), dans lequel l'aboutement se laisse positionner dans au moins deux positions angulaires radiales par la coopération à emboîtement de moyens de blocage sur une base d'aboutement proximale et d'au moins une paroi intérieure de la section proximale de l'ouverture de réception (11) de l'implant, dans lequel les moyens de blocage comprennent un siège de clé à N côtés (13a) dans l'implant (10, 20, 30, 31, 32) et un polygone extérieur N*X (44) sur l'aboutement (40, 50, 60, 70, 80), dans lequel N désigne le nombre de faces de blocage dans le siège de clé (13a) et N*X est un multiple entier de N et X est supérieur à 1.

2. Système de remplacement de dent (1, 2, 3, 4, 5) selon la revendication 1, **caractérisé en ce que** les paires de moyens de blocage sont basées sur des polygones réguliers, de préférence choisis respectivement dans la série de trois, quatre, cinq ou six côtés.

3. Système de remplacement de dent (1, 2, 3, 4, 5) selon la revendication 2, **caractérisé en ce que** les polygones réguliers sont des prismes polygonaux avec des sections transversales polygonales régulières et des largeurs de côté uniformes.

4. Système de remplacement de dent (1, 2, 3, 4, 5) comprenant un implant (10, 20, 30, 31, 32) destiné à l'ostéointégration dans un os maxillaire et un aboutement (40, 50, 60, 70, 80), dans lequel l'aboutement se laisse positionner dans au moins deux positions angulaires radiales par la coopération à emboîtement de moyens de blocage sur une base d'aboutement proximale et d'au moins une paroi intérieure de la section proximale de l'ouverture de réception (11) de l'implant, dans lequel les moyens de blocage (13a, 44) sont basés sur un siège de clé régulier à N côtés (13a) dans l'implant (30) et un polygone extérieur fonctionnel N*X sur l'aboutement (60), dans lequel seul un nombre minimal nécessaire de faces actives sont réalisées sous forme de faces de blocage fonctionnelles (45) et des parties suffisantes d'un véritable polygone sont réalisées physiquement, dans lequel N désigne le nombre de faces de blocage dans le siège de clé (13a) et N*X est un multiple entier de N et X est supérieur à 1.

5. Système de remplacement de dent (1, 2, 3, 4, 5) comprenant un implant (10, 20, 30, 31, 32) destiné à l'ostéointégration dans un os maxillaire et un aboutement (40, 50, 60, 70, 80), dans lequel l'aboutement se laisse positionner dans au moins deux positions angulaires radiales par la coopération à emboîtement de moyens de blocage sur une base d'aboutement proximale et d'au moins une paroi intérieure de la section proximale de l'ouverture de réception (11) de l'implant, dans lequel les moyens de blocage (13a, 44) sont basés un polygone extérieur régulier N*X (44) sur l'aboutement et un siège de clé fonctionnel à N côtés (13a) dans l'implant, dans lequel seule une ou un nombre minimal nécessaire de faces actives sont réalisées physiquement sous forme de faces de blocage fonctionnelles, dans lequel N désigne le nombre de faces de blocage fonctionnelles dans le siège de clé (13a) et N*X est un multiple entier de N et X est supérieur à 1.

6. Système de remplacement de dent (1, 2, 3, 4, 5) selon l'une quelconque des revendications précédentes, **caractérisé en ce que** l'aboutement (40, 50, 60, 70, 80) se laisse coller dans l'ouverture de réception (11).

7. Système de remplacement de dent (1, 2, 3, 4, 5) selon l'une quelconque des revendications 1 à 6, **caractérisé en ce que** l'implant (10, 20, 30, 31, 32) et/ou l'aboutement (40, 50, 60, 70, 80) sont fabriqués en titane ou en céramique.

8. Système de remplacement de dent (1, 2, 3, 4, 5) selon la revendication 7, **caractérisé en ce que** l'implant céramique (10, 20, 30, 31, 32) et/ou l'aboutement céramique (40, 50, 60, 70, 80) sont fabriqués en oxyde de zirconium ou en un mélange d'oxyde de zirconium et d'aluminium.

9. Système de remplacement de dent (1, 2, 3, 4, 5) selon l'une quelconque des revendications précédentes, **caractérisé en ce que**, lorsque l'aboutement (40, 50, 60, 70, 80) est inséré, un tronc d'aboutement (41, 91) s'applique avec une face de base (46) sur une face de fond (15) dans l'ouverture de réception (11).

10. Système de remplacement de dent (1, 2, 3, 4, 5) selon l'une quelconque des revendications précédentes, **caractérisé en ce que** l'aboutement est constitué par un corps massif.
